(19)

Europäisches
Patentamt

European
Patent Office

Office européen
des brevets

(11) **EP 4 455 082 A1**

(12) **EUROPEAN PATENT APPLICATION**

(43) Date of publication:
**30.10.2024 Bulletin 2024/44**

(21) Application number: **23170103.8**

(22) Date of filing: **26.04.2023**

(51) International Patent Classification (IPC):
**C01B 32/05** (2017.01)     **C01B 32/205** (2017.01)
**C04B 11/028** (2006.01)     **C10B 3/00** (2006.01)
**F27B 1/10** (2006.01)

(52) Cooperative Patent Classification (CPC):
**C01B 32/205; C01B 32/05; F27B 1/10**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **SGL Carbon SE
65201 Wiesbaden (DE)**

(72) Inventors:
• **KÜFNER, Alexander
86405 Meitingen (DE)**
• **LOSHER, Richard
86405 Meitingen (DE)**

(54) **GRAPHITIZATION FURNACE COMPRISING AN AGITATOR**

(57)     In a first aspect, the present disclosure relates to a vertical graphitization furnace 100 for continuously graphitizing carbonaceous material comprising a raw material inlet 120 and a product outlet 130, a channel 110 extending along a longitudinal channel axis 300 connecting the raw material inlet 120 and the product outlet 130, and an agitator comprising at least one mixing paddle 140 disposed on a shaft 150.

**Figure 1**

EP 4 455 082 A1

**Description**

**Technical Field**

The present invention relates to the field of graphitization furnaces. More specifically, the present invention relates to graphitization furnaces comprising agitators.

**Background**

The most common commercially used anode material in lithium-ion batteries is graphite. The graphite can be lithiated to the state of $LiC_6$, which correlates to a theoretical maximal capacity of 372 mAh/g.

Artificial graphite may be produced by heating carbonaceous starting materials, such as coke and/or pitch, to temperatures of about 3000 °C under exclusion of oxygen. The heating may be performed in batch or continuous furnaces. In a continuous furnace, carbonaceous material is typically conveyed along a heated channel, transitioning to graphite while being conveyed.

The process of continuous graphitization may be advantageous because it may produce graphite more efficiently than a batch process and may allow for industrial scale production. However the inventors have found that some carbonaceous materials, in particular carbonaceous material in the form of powder, may have a tendency to cake in continuous furnaces. The caking may lead to an inhomogeneous temperature distribution, which in turn may result in a reduced product quality and consistency. It also may result in reduced process efficiency and higher production costs due to interruptions in the continuous process while resolving caking-induced channel blockage, as well as the need to re-process some products that have not been fully graphitized due to the caking.

In order to address the aforementioned issues, the inventors have developed a graphitization furnace.

**Summary**

In a first aspect, the present disclosure relates to a vertical graphitization furnace for continuously graphitizing carbonaceous material comprising a raw material inlet and a product outlet, a channel extending along a longitudinal channel axis connecting the raw material inlet and the product outlet, and an agitator comprising at least one mixing paddle disposed on a shaft.

In some embodiments, the channel may comprise a heating zone, a high temperature reaction zone and a cooling zone.

In some embodiments, the at least one mixing paddle may be arranged in the high temperature reaction zone and/or the cooling zone and may perform a rotational motion substantially perpendicular to the longitudinal channel axis connecting the raw material inlet and the product outlet.

In some embodiments, the maximum radius of rotation of the at least one mixing paddle may be at least 80 % of the maximum radius of the channel at the location where the at least one mixing paddle is arranged.

In some embodiments, the channel may comprise a first terminal end at the raw material inlet and a second terminal end at the product outlet, wherein a first distance L1 may be the distance between the first terminal end and the second terminal end, and a second distance L2 may be the distance between the closest part of the at least one mixing paddle and the second terminal end.

In some embodiments, the ratio L2/L1 may be less than 0.15.

In some embodiments, the ratio of L2/L1 may be between about 0 to about 0.15, more specifically between about 0.03 to about 0.12 and in particular between about 0.05 to about 0.10.

In some embodiments, a third distance L3 may be the distance between the farthest part of the at least one mixing paddle and the second terminal end 200 and the ratio L3/L1 may be less than 0.7.

In some embodiments, the ratio of L3/L1 may be between about 0.15 to about 0.65, more specifically between about 0.25 to about 0.60 and in particular between about 0.35 to about 0.55.

In some embodiments, the agitator may be configured to move along the longitudinal channel axis, more specifically by moving along the longitudinal channel axis between a longitudinal start position and a longitudinal end position, in particular in a shaking motion.

In some embodiments, the agitator may be configured to vibrate, more specifically by moving between a vibration start position and a vibration end position.

In some embodiments, the distance between the longitudinal start position and the longitudinal end position may be between about 1 cm to about 30 cm.

In some embodiments, the travel time between the longitudinal start position and the longitudinal end position may be between about 1 second to about 1 minute.

In some embodiments, the distance between the vibration start position and vibration end position may be between about 0.1 mm to about 0.5 cm.

In some embodiments, the travel time between the vibration start position and the vibration end position may be between about 1 ms to about 0.7 seconds.

In some embodiments, the agitator may comprise a gas or vacuum channel, in particular the gas or vacuum channel may be disposed within the shaft.

In some embodiments, the shaft may comprise a gas-impermeable tube and a gas-permeable section or aperture, in particular a gas-permeable head end.

In some embodiments, the gas-permeable sections or apertures may comprise gas outlets, in particular gas outlets with a diameter less than the particle diameter of the carbonaceous material.

In some embodiments, a low-porosity graphite tube, in particular closed pored graphite, may form the gas-impermeable tube.

In some embodiments, the gas-impermeable tube may comprise inlays of open pored graphite configured to allow gas to pass through.

In some embodiments, the gas-permeable sections or apertures may be arranged radially along sections of the gas-impermeable tube.

In some embodiments, the gas-permeable apertures may be formed as protrusions, wherein the protrusions may comprise a protrusion-gas-channel configured to guide inert gas and/or purge gas to a protrusion-gas-outlet.

In some embodiments, the gas-permeable apertures formed as protrusions may extend in radial direction from the shaft, in particular in radial direction away from the longitudinal channel axis.

In some embodiments, the gas-permeable apertures may be comprised within the at least one mixing paddle.

In some embodiments, the agitator may comprise a plurality of mixing paddles, wherein a first maximum radius of rotation of a first mixing paddle may be greater than a second maximum radius of rotation of a second mixing paddle, in particular wherein the first mixing paddle may be disposed closer to the product outlet.

In some embodiments, the shaft may extend from the second terminal end, in particular the shaft may extend from the second terminal end along the longitudinal channel axis towards the first terminal.

In some embodiments, a fourth distance L4 may be the distance between the farthest part of the shaft and the second terminal end, and wherein L4/L1 may be less than 0.8.

In some embodiments, the ratio of L4/L1 may be between about 0.15 to about 0.65, more specifically between about 0.25 to about 0.60 and in particular between about 0.35 to about 0.55.

In some embodiments, a fifth distance L5 may be the distance between a closest gas-permeable section or aperture and the second terminal end 200, wherein the ration L5/L1 may be between about 0.01 to about 0.40, more specifically between about 0.05 to about 0.30 and in particular between about 0.10 to about 0.2.

In some embodiments, at least one wall segment of the of the channel may be angled radially outward.

In some embodiments, the channel may comprise an upstream section closer to the raw material inlet and a downstream section closer to the product outlet.

In some embodiments, the upstream section may have a first cross-sectional area closer to the raw material inlet and second cross-sectional area closer to the product outlet, the downstream section may have a third cross-sectional area closer to the raw material inlet and fourth cross-sectional area closer to the product outlet, wherein the second cross-sectional area section may be larger than the first cross-sectional area, and wherein the fourth cross-sectional area may be larger than the second and third cross-sectional area.

In some embodiments, the upstream section may have a sixth length L6 and the downstream section may have a seventh length L7, in particular wherein the upstream section and downstream section adjoin and the upstream section and downstream section have an aggregate length L8 and wherein the ratio L7/L8 may be smaller than 0.5, more specifically smaller than 0.3 and in particular smaller than 0.2. Additionally or alternatively, the ratio of L7/L8 may be between about 0.03 to about 0.5, more specifically 0.05 to about 0.3 and in particular between about 0.1 to about 0.2.

In some embodiments, the channel may have a first inner diameter D1, a second inner diameter D2, a third inner diameter D3 and a fourth inner diameter D4 in the plane of the first, second, third and fourth cross-sectional area respectively, wherein the inner diameters meet the requirement $\frac{D2-D1}{L6} < \frac{(D4-D3)}{L7}$ .

In some embodiments, the channel may have a first angle $\alpha_1$ defined as meeting the criterion:

$$\alpha_1 = \arctan\left(\frac{D2-D1}{2*L6}\right)$$ and a second angle $\alpha_2$ defined as meeting the criterion: $\alpha_2 = \arctan\left(\frac{D4-D3}{2*L7}\right)$ and wherein $\alpha_1 < \alpha_2$.

In some embodiments, the first angle $\alpha_1$ may be less than 45°, 35°, 30°, 20°, 15°, 10°, 9°, 8°, 7°, 6°, 5°, 4°, 3°, 2° or 1°.

In some embodiments, the first angle $\alpha_1$ may be between about 0.1 to about 45°, more specifically between about 0.2° and 20° and in particular between about 0.3° to about 10°.

In some embodiments, it may be particularly advantageous that the first angle $\alpha_1$ may be less than 20°, 15°, 10°, 9°, 8°, 7°, 6°, 5°, 4°, 3°, 2° or 1°, in particular the first angle $\alpha_1$ may be between about 0.1 to about 20°, more specifically between about 0.2° and 10° and in particular between about 0.3° to about 5°.

In some embodiments, the first angle $\alpha_1$ may be between about 0.1° to about 5°, more specifically between about 0.1° to about 2° and in particular between about 0.1° to about 1.5°.

In some embodiments, the first angle $\alpha_1$ may be between about 0.1° to about 5°, more specifically between about 0.2° to about 2° and in particular between about 0.3° to about 1.5°.

In some embodiments, the second angle $\alpha_2$ may be less than 45°, 35°, 30°, 20°, 15°, 10°, 9°, 8°, 7°, 6°, 5°, 4°, 3°, 2° or 1°.

In some embodiments, the second angle $\alpha_2$ may be between about 0.1 to about 45°, more specifically between about 0.2° and 20° and in particular between about 0.3 to about 10°.

In some embodiments, it may be particularly advantageous that the second angle $\alpha_2$ may be less than 20°, 15°, 10°, 9°, 8°, 7°, 6°, 5°, 4°, 3°, 2° or 1°, in particular the second angle $\alpha_2$ may be between about 0.1 to about 20°, more specifically between about 0.2° and 10° and in particular between about 0.3° to about 5°.

In some embodiments, the second angle $\alpha_2$ may be between about 0.1° to about 5°, more specifically between about 0.1° to about 2° and in particular between about 0.1° to about 1.5°.

In some embodiments, the second angle $\alpha_2$ may be between about 0.1° to about 5°, more specifically between about 0.2° to about 2° and in particular between about 0.3° to about 1.5°.

In some embodiments, the first angle $\alpha_1$ may be less than 45°, 35°, 30°, 20°, 15°, 10°, 9°, 8°, 7°, 6°, 5°, 4°, 3°, 2° or 1°; and the second angle $\alpha_2$ may be less than 45°, 35°, 30°, 20°, 15°, 10°, 9°, 8°, 7°, 6°, 5°, 4°, 3°, 2° or 1°.

In some embodiments, the first angle $\alpha_1$ may be between about 0.1° to about 45°, more specifically between about 0.2° and 20° and in particular between about 0.3° to about 10°; and the second angle $\alpha_2$ may be between about 0.1° to about 45°, more specifically between about 0.2° and 20° and in particular between about 0.3° to about 10°.

In some embodiments, it may be particularly advantageous that the first angle $\alpha_1$ may be less than 20°, 15°, 10°, 9°, 8°, 7°, 6°, 5°, 4°, 3°, 2° or 1°, in particular the first angle $\alpha_1$ may be between about 0.1 to about 20°, more specifically between about 0.2° and 10° and in particular between about 0.3 to about 5°; and the second angle $\alpha_2$ may be less than 20°, 15°, 10°, 9°, 8°, 7°, 6°, 5°, 4°, 3°, 2° or 1°, in particular the second angle $\alpha_2$ may be between about 0.1° to about 20°, more specifically between about 0.2° and 10° and in particular between about 0.3° to about 5°.

In some embodiments, the first angle $\alpha_1$ may be between about 0.1° to about 5°, more specifically between about 0.1° to about 2° and in particular between about 0.1° to about 1.5°; and the second angle $\alpha_2$ may be between about 0.1° to about 5°, more specifically between about 0.1° to about 2° and in particular between about 0.1° to about 1.5°.

In some embodiments, the first angle $\alpha_1$ may be between about 0.1° to about 5°, more specifically between about 0.2° to about 2° and in particular between about 0.3° to about 1.5; and the second angle $\alpha_2$ may be between about 0.1° to about 5°, more specifically between about 0.2° to about 2° and in particular between about 0.3° to about 1.5°.

In some embodiments, the first angle $\alpha_1$ may be between about 0.1° to about 5°, more specifically between about 0.2° to about 2° and in particular between about 0.3° to about 1.5°; and the second angle $\alpha_2$ may be between about 0.1° to about 5°, more specifically between about 0.2° to about 2° and in particular between about 0.3° to about 1.5°.

In some embodiments, the agitator may comprise a plurality of mixing paddles, wherein a first maximum radius of rotation of a first mixing paddle may be greater than a second maximum radius of rotation of a second mixing paddle, in particular wherein the first mixing paddle may be disposed closer to the product outlet.

In some embodiments, at least one the mixing paddle may be plate-shaped.

In some embodiments, graphitization furnace may comprise at least one baffle.

In some embodiments, the furnace may be configured to may have a non-forced gravity-based material flow in at least 70 vol.-% of the channel.

In some embodiments, the agitator comprises, substantially consists of or consists of graphite or CFRC.

In a second aspect, the present disclosure relates to a method of using a graphitization furnace according to any preceding embodiment for preparing graphite from a carbonaceous raw material.

**Brief Description of the Figures**

**Fig. 1** shows a cross-section of a vertical graphitization furnace comprising an agitator.

**Fig. 2** shows a cross-section of a vertical graphitization furnace with a variable diameter.

**Detailed Description**

Hereinafter, a detailed description will be given of the present disclosure. The terms or words used in the description and the aspects of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

As stated above, artificial graphite may be produced by heating carbonaceous starting materials, such as coke and/or pitch, to temperatures of about 3000 °C under exclusion of oxygen. The starting material typically comprises non-crystalline carbon which is transformed to graphite, due to the heat. An important property of graphite is its degree of crystallinity. A higher crystallinity may result for example in a higher maximal capacity when used in a battery.

The term "graphite" is well known and attributed its common meaning in the art. More specifically, the term "graphite" may refer to a material comprising crystalline carbon in a hexagonal structure. Alternatively or additionally, the term "graphite" may refer to a material comprising at least about 60 %, more specifically at least about 80 % and in particular at least about 83 % crystalline carbon in a hexagonal structure. Alternatively or additionally, the term "graphite" may refer to a material with a graphitization degree of at least about 46 %, more specifically 69 %, even more specifically at least about 80 % and in particular at least about 83 %.

The crystallinity of a graphite may be described via its graphitization degree which may be measured by X-ray diffraction (XRD). The crystalline carbon in the graphite forms a plurality of honeycomb lattices. The distance between the plurality of honeycomb lattices is described by the parameter "interplane distance $d_{002}$. XRD may be used to measure the interplane distance $d_{001}$ between the plurality of lattices. An interplane distance $d_{002}$ of 0.3440 nm corresponds to the interplane distance of turbostratic graphite and an interplane distance of 0.3354 nm corresponds to the interplane distance in a perfect graphite crystal.

The interplane distance may be used to calculate the graphitization degree by the following formula:

$$Graphitization\ Degree = \frac{0.3440nm - d_{002}}{0.3440nm - 0.3354nm}$$

A higher graphitization degree may correspond to a higher maximum discharge capacity.

Heat treatment of the carbonaceous material may be performed in a continuous furnace, i.e. a furnace which is configured for a continuous or semi-continuous production of graphite. For example, carbonaceous raw material may be conveyed along a channel between a raw material inlet and a product outlet, while being heated. The carbonaceous raw material may be in any form, for instance in powder form or granulated, more specifically in powder form.

However, it has been found that the carbonaceous material may cake in sections of the channel. In particular, the caking may occur in sections closer to the product outlet. The channel may be arranged vertically between a material inlet at the top and an outlet at the bottom. As a result, the carbonaceous material may form a material column, wherein the carbonaceous material at the bottom of the material column, e.g. close to the product outlet, is compressed by the carbonaceous material disposed above it. The compression may significantly increase the material's propensity for caking.

This caking may also result in a reduced flowability of the carbonaceous material which may result in an impaired material flow. In particular, the reduced flowability may result in an impeded discharge of the carbonaceous material from the product outlet. Additionally, the caking and/or reduced flowability may lead to inhomogeneities in the conveyed carbonaceous material. For example, the caking and/or reduced flowability may lead to an inhomogeneous temperature distribution in the carbonaceous material disposed in the graphitization furnace. These inhomogeneities may, in turn, result in a reduced product quality, e.g. a reduced degree of graphitization or inhomogeneous degree of graphitization. Furthermore, the caking may also lead to the product discharged from the graphitization furnace to comprise agglomerates, which may reduce the product quality or require post-processing to break-up the agglomerates.

It has been found that an agitator comprising at least one mixing paddle disposed on a shaft within the channel may be used as an effective means to prevent caking of the carbonaceous material and to improve material flow. The product obtainable from such a furnace may be endowed with superior product quality, rendering it particularly suitable for use as anode material, in particular anode material for lithium batteries.

Accordingly, in a first aspect, the present disclosure relates to a vertical graphitization furnace 100 for continuously graphitizing carbonaceous material comprising a raw material inlet 120 and a product outlet 130, a channel 110 extending along a longitudinal channel axis 300 connecting the raw material inlet 120 and the product outlet 130, and an agitator comprising at least one mixing paddle 140 disposed on a shaft 150.

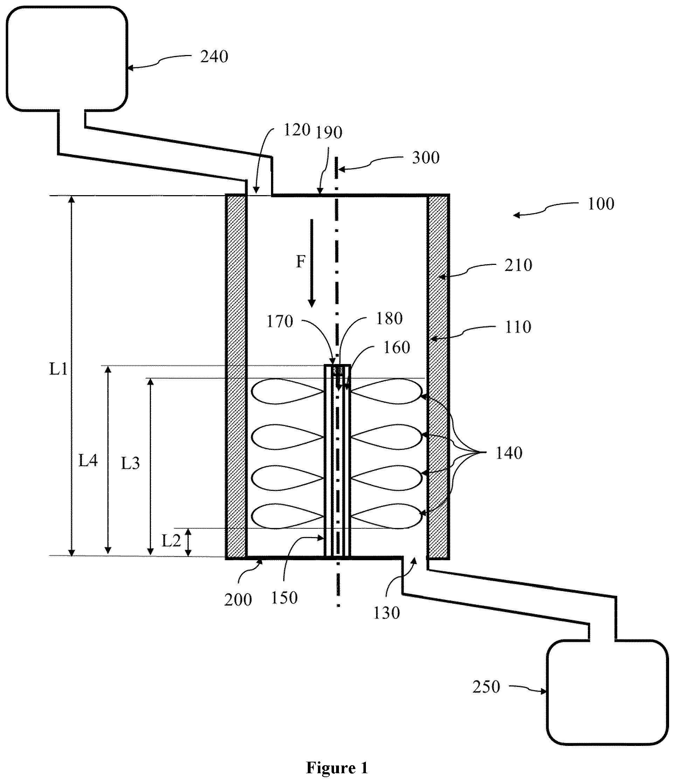

Figure 1 shows an exemplary schematic of a vertical graphitization furnace 100 according to the first aspect.

The channel 110 is arranged between a raw material inlet 120 and a product outlet 130 along a longitudinal channel axis 300. The orientation of the longitudinal channel axis 300 may correspond to the material flow direction F. Carbonaceous material is supplied to channel 110 via the raw material inlet 120 and converted to graphite while passing through channel 110. Graphite is then discharged through the product outlet 130. In some embodiments, the raw material inlet 120 may be connected to a hopper 240 comprising carbonaceous raw material. In some embodiments, the product outlet 130 may be connected to a collecting tank 250 or a cooling device. Further, the exemplary graphitization furnace 100 depicted in Figure 1 comprises four sets of mixing paddles 140 disposed on a shaft 150. The number of mixing paddles 140 is not particularly limited and may be freely selected, e.g. based on the dimensions and/or throughput of the graphitization furnace 100. Furthermore, the vertical graphitization furnace may comprise additional structures. In some embodiments, the vertical graphitization furnace may comprise an isolation structure 210 surrounding the channel 110.

In some embodiments, the channel 110 may comprise a heating zone, a high temperature reaction zone and a cooling zone. The heating zone may be characterized by the temperature of the carbonaceous material increasing in flow direction when the vertical graphitization furnace 100 is used. The high temperature reaction zone may be characterized by the carbonaceous material having a temperature of at least 80% of the maximum temperature achieved in the vertical graphitization furnace 100. The cooling zone may be characterized by the temperature of the carbonaceous material decreasing in flow direction when the vertical graphitization furnace 100 is used. As mentioned above, the carbonaceous material may be more prone to caking at the lower end of a material column, e.g. towards the product outlet 130 or the gravitational center of the earth, where the pressure is increased. Further, as mentioned above, the carbonaceous material may be in particular prone to caking in sections of the channel 110 wherein the carbonaceous material is allowed to cool, e.g. the cooling zone. Therefore arranging the at least one mixing paddle 140 in the cooling zone may be particularly expedient. Accordingly, in some embodiments, the at least one mixing paddle 140 may be arranged in the high temperature reaction zone and/or the cooling zone, and in particular in the cooling zone. Further, in some embodiments the at least one mixing paddle 140 may perform a rotational motion substantially perpendicular to the longitudinal channel axis 300.

The arrangement of the at least one mixing paddle 140 may also be defined geometrically relative to the longitudinal channel length, as depicted in Figure 1. In some embodiments, the channel 110 may comprise a first terminal end 190 at the raw material inlet 120 and a second terminal end 200 at the product outlet 130, wherein a first length L1 may be the distance between the first terminal end 190 and the second terminal end 200, and a second length L2 may be the distance between the closest part of the at least one mixing paddle 140 and the second terminal end 200, and the ratio L2/L1 may be less than 0.15. In some embodiments, the ratio of L2/L1 may be between about 0 to about 0.15, more specifically between about 0.03 to about 0.12 and in particular between about 0.05 to about 0.10.

As mentioned above, the risk of caking and reduced flowability may be lower in the heating zone and at least parts of the high temperature reaction zone. Therefore, mixing the carbonaceous material in these zones may not be necessary to prevent caking and to improve the material flow. On the contrary, mixing in these zones may result in increased wear on the channel 110 and/or a higher power consumption by the agitator. Accordingly, in some embodiments, a third distance L3 may be the distance between the farthest part of the at least one mixing paddle 140 and the second terminal end 200 and the ratio L3/L1 may be less than 0.7. In some embodiments, the ratio of L3/L1 may be between about 0.15 to about 0.65, more specifically between about 0.25 to about 0.60 and in particular between about 0.35 to about 0.55.

The method of measuring L1, L2 and L3 is not particularly limited. The second length L2 may be determined by measuring the shortest distance between the closest mixing blade of the at least one mixing paddle 140(s) and the second terminal end 200 in parallel to the longitudinal channel axis 300. The third length L3 may be determined by measuring the farthest distance between the farthest mixing blade of the at least one mixing paddle(s) 140 and the second terminal end 200 in parallel to the longitudinal channel axis 300. Further, the first length L1 may be determined by measuring the distance between the geometric center of the first terminal end 190 and the second terminal end 200. Moreover, the longitudinal channel axis 300 is not necessarily straight. For example, if the channel 110 is curved, the longitudinal channel axis 300 may also be curved. In this case, L1 may be measured by determining the geometric centers of a plurality of cross-sectional areas along the channel 110 and summing up the individual distances between the geometric centers, respectively.

The maximum radius of rotation of the at least one mixing paddle 140 may be at least 80 % of the maximum radius of the channel 110 at the location where the at least one mixing paddle 140 is arranged. More specifically the maximum radius of rotation of the at least one mixing paddle 140 may be between about 80 % to about 98 % and in particular between about 85% to about 95% of the maximum radius of the channel 110 at the location where the at least one mixing paddle 140 is arranged. The aforementioned maximum radii above 80% may be helpful in providing a scraping effect near the channel walls and, thus, reduce material backings on the walls. The mixing paddle 140 shall not contact the walls of the channel 110 to avoid excessive abrasion.

Further, it has been found that movements of the agitator along the longitudinal channel axis 300 may aid in loosening the carbonaceous material, which may reduce the risk of caking. In some embodiments, the agitator may be configured to move along the longitudinal channel axis 300, more specifically by moving along the longitudinal channel axis between a longitudinal start position and a longitudinal end position, in particular in a shaking motion. The term "shaking motion" may refer to a repeating movement along the longitudinal channel axis 300, in particular a repeating movement between a longitudinal start position and a longitudinal end position. Hence, the agitator may move along the longitudinal channel axis 300 in both directions between the longitudinal start position and the longitudinal end position. In some embodiments, the distance between the longitudinal start position and the longitudinal end position may be between about 1 cm to about 30 cm. In some embodiments, the travel time between the longitudinal start position and the longitudinal end position may be between about 1 second to about 1 minute. In some embodiments, the agitator may be configured to vibrate, more specifically by moving between a vibration start position and a vibration end position. The term "vibrate" may refer to a repeating movement in any axis, in particular a repeating movement between a start position and an end position. The vibration may exhibit a significantly lower travel time and distance travelled compared to the shaking motion. In some embodiments, the distance between the vibration start position and vibration end position may be between about 0.1 mm to about 0.5 cm. In some embodiments, the travel time between the vibration start position and the vibration end position may be between about 1 ms to about 0.7 seconds.

In addition to caking, the removal of impurities comprised within the carbonaceous starting materials is a challenge of graphitization. These impurities, also referred to as ash, may outgas from the carbonaceous material during the graphitization. For example, coke, which may be used a carbonaceous starting material, may comprise up to 35 wt.-% of ash. To attain a high-quality graphite from the graphitization process, the ash needs to be removed from the carbonaceous material and therefore from the channel 110.

The ash typically comprises inorganic impurities, more specifically oxides such as silicon oxide $SiO_2$ or aluminum oxide $Al_2O_3$. Under graphitization conditions, these inorganic impurities are volatile or may be converted *in-situ* in volatile species such as carbides. The impurities may also be actively converted into more volatile substances by adding purge gases.

The ash may leave the channel 110 within a gas stream by applying an overpressure to the channel 110 compared to its surroundings and/or by generating a reduced pressure in the channel's 110 surroundings. For example, the purge gas and/or inert gases may be used to increase the pressure in the channel 110 or a vacuum pump may be in gaseous communication with the channel 110.

Therefore, a feed system for the purge gas and/or inert gas may be included in the graphitization furnace 100.

Accordingly, in some embodiments, the agitator may comprise a gas or vacuum channel 180, in particular wherein the gas or vacuum channel 180 may be disposed within the shaft 150. In some embodiments, the shaft 150 may comprise a gas-impermeable tube 160 and a gas-permeable section or aperture, in particular a gas-permeable head end 170. The gas-impermeable tube 160 may form the gas channel 180. The purge gas and/or inert gas may be guided within the gas-impermeable tube 160 and enter the channel 110 through the gas-permeable sections or apertures, in particular the gas-permeable head end 170. In some embodiments, the gas-permeable sections or apertures may comprise gas outlets, in particular gas outlets with a diameter less than the particle diameter of the carbonaceous raw material. The gas outlets may be produced for example by drilling holes into a gas-impermeable tube 160. Alternatively or additionally, in some embodiments, the gas-permeable sections may be formed a gas-permeable material. For example, in some embodiments, a low-porosity graphite tube, in particular closed pored graphite, may form the gas-impermeable tube 160, wherein the gas-impermeable tube 160 comprises inlays of open pored graphite configured to allow gas to pass through. In some embodiments, as depicted in Figure 1, the gas-permeable head end 170 may be formed of an inlay of gas-permeable graphite disposed at the end of a gas-impermeable tube 160.

In these and other instances, the reference to a gas permeable structure or material may in particular refer to a structure or material having a gas permeability of at least 0.3 $cm^2$/s measured according to DIN 51935:2019-07. In these and other instances, the reference to a gas-impermeable structure or material may in particular refer to a structure or material having a gas permeability of less than 0.3 $cm^2$/s measured according to DIN 51935:2019-07. Suitable structures or materials having the required gas-(im)permeability are well-known to the skilled person. For instance, Sigrafine HLR, HLM and HLS grades may be used as gas permeable material, and Sigrafine HLX and isostatic graphite grades may be used as gas-impermeable material. All of these grades are available from SGL Carbon GmbH, Germany.

Alternatively or additionally, in some embodiments, the gas-permeable sections or apertures may be arranged radially (not depicted) along sections of the gas-impermeable tube 160. The gas-permeable sections or apertures arranged radially along sections of the gas-impermeable tube 160 may result in purge gas and/or inert gas flowing around the shaft 150 and/or the at least one mixing paddle 140. The purge gas and/or inert gas flowing around the shaft 150 and/or the at least one mixing paddle 140 may fluidize the carbonaceous material around the shaft 150 and/or the at least one mixing paddle 140. The carbonaceous material being fluidized around the shaft 150 and/or the at least one mixing paddle 140 may reduce the rate of wear on the shaft 150 and/or the at least one mixing paddle 140. In some embodiments, the gas-permeable apertures may be formed as protrusions, wherein the protrusions comprise a protrusion-gas-channel configured to guide the inert gas and/or purge gas to a protrusion-gas-outlet. In some embodiments, the gas-permeable apertures formed as protrusions may extend in radial direction from the shaft 150, in particular in radial direction away from the longitudinal channel axis. The gas-permeable apertures formed as protrusions extending in radial direction from the shaft 150 may allow improved distribution of the inert gases and/or purge gases over the width of the channel 110. Additionally or alternatively, in some embodiments, the gas-permeable apertures may be comprised within the at least one mixing paddle 140. Gas-permeable apertures disposed in the at least one mixing paddle 140 may facilitate distributing the inert gas and/or purge gases over the cross-sectional area of the vertical graphitization furnace 100.

In some embodiments, the shaft 150 may extend from the second terminal end 200. More specifically, in some embodiments, the shaft 150 may extend from the second terminal end 200 along the longitudinal channel axis towards the first terminal. The shaft 150 may not be connected to the first terminal end 190, e.g. the shaft 150 may not extend over the entire first length L1 between the first terminal end 190 and the second terminal end 200. Therefore, using the shaft 150 as a guiding system for the purge gas and/or inert gas, may allow flushing the channel 110 from the bottom to the top, in particular if a gas outlet (not depicted) is arranged towards the first terminal end 190 or raw material inlet 120. The gas outlet may be configured to allow gases to escape from the channel 110. The gas outlet may be for example a tube extending through the channel 110 and if present through the isolation structure 210. As a result, the carbonaceous material may be fluidized, hence reducing the risk for caking. Additionally, flushing the channel 110 from the bottom the top may result in a purer product, as the highest concentration of purge gas is achieved at the bottom of the channel 110, where the lowest amount of impurities can be expected, resulting in a favorable reaction equilibrium towards the more volatile reaction products of the purge gas and the ash. In some embodiments, a fourth distance L4 may be the distance between the farthest part of the shaft 150 and the second terminal end 200, wherein L4/L2 may be less than 0.8. In some embodiments, the ratio of L3/L1 may be between about 0.15 to about 0.65, more specifically between about 0.25 to about 0.60 and in particular between about 0.35 to about 0.55. In some embodiments, a fifth distance L5 may be the distance between a closest gas-permeable section or aperture and the second terminal end 200, wherein the ration L5/L1 may be between about 0.01 to about 0.40, more specifically between about 0.05 to about 0.30 and in particular between about 0.10 to about 0.2. Again, L4 and L5 may be measured in particular parallel to the longitudinal channel axis 300.

Further, it has been found that the transport of carbonaceous material prone to caking may be improved by providing a channel 110 section with a diameter increasing in the material transport direction. In particular, material transport may be improved by providing a channel 110 section with a diameter increasing in the material transport direction and an additional channel 110 section wherein the diameter increases even further.

Accordingly, in some embodiments, at least one wall segment of the of the channel 110 may be angled radially outward (in the material flow direction F and relative to the longitudinal channel axis 300). In some embodiments, the channel 110 may comprise an upstream section 220 closer to the raw material inlet 120 and a downstream section 230 closer to the product outlet 130. The upstream section 220 may have a first cross-sectional area closer to the raw material inlet 120 and a second cross-sectional area closer to the product outlet 130 and the downstream section 230 may have a third cross-sectional area closer to the raw material inlet 120 and fourth cross-sectional area closer to the product outlet 130. The second cross-sectional area section may be larger than the first cross-sectional area and the fourth cross-sectional area may be larger than the second and third cross-sectional area. In some embodiments, the upstream section 220 and the downstream section 230 are spaced apart or adjoining, in particular adjoining. Hence the downstream section 220 and the upstream section 230 may be directly connected.

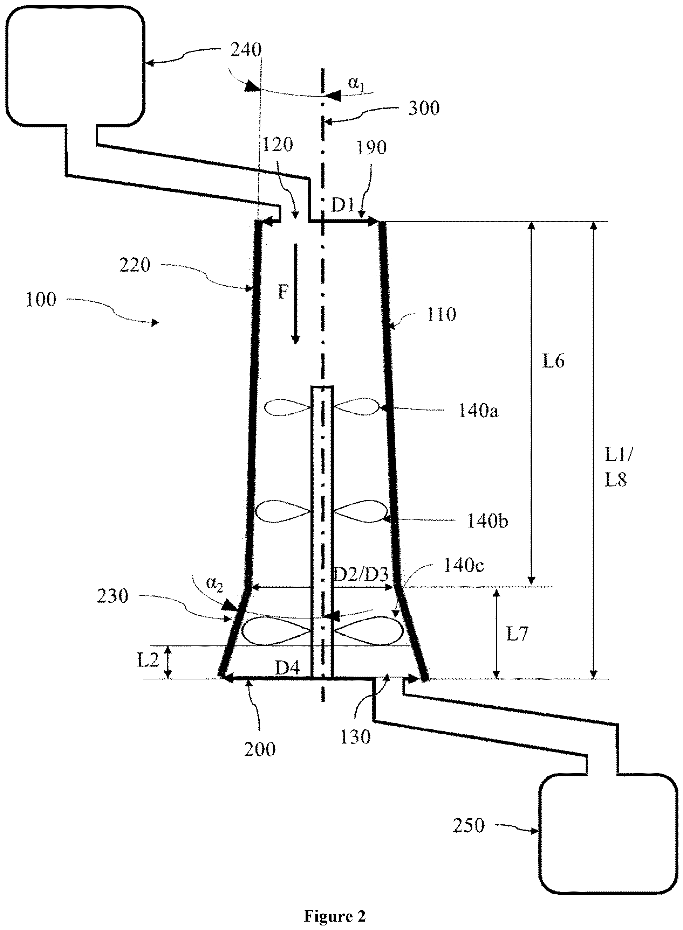

Figure 2 shows an example of a channel 110 comprising a longitudinal channel axis 300, wherein the channel 110 comprises the first, second, third and fourth cross-sectional area. In some embodiments, the channel 110 may have a first inner diameter D1 in the plane of the first-cross-sectional area. Accordingly, in some embodiments, the channel 110 may have a second D2, third D3 and fourth D4 inner diameter in the plane of the second, third and fourth cross-sectional area respectively. In some embodiments, the second cross-sectional area is the third cross-sectional area. In some embodiments, the upstream section 220 may have a sixth length L6 and the downstream section 230 may have a seventh length L7. In some embodiments, the upstream section 220 and downstream section 230 adjoin and the upstream section 220 and downstream section 230 may have an aggregate length L8 and the ratio L7/L8 may be smaller than 0.5, more specifically smaller than 0.3 and in particular smaller than 0.15. Additionally or alternatively, the ratio of L7/L8 may be between about 0.03 to about 0.5, more specifically 0.05 to about 0.3 and in particular between about 0.1 to about 0.15. The aggregate eighth length L8 may be the same as the first length L1, as is depicted in Figure 2. In some embodiments, the first cross-sectional area may be the cross-sectional area of the first terminal end 190 and the fourth cross-sectional area may be the cross-sectional area of the second terminal end 200. The seventh length L7 may be measured between the third cross-sectional area and the fourth cross-sectional area.

The method of measuring L6, L7 and L8 is not particularly limited. For instance, the sixth length L6 may be determined by measuring the length of the central-channel-axis 300 between the first cross-sectional area and the second cross-sectional area. Alternatively, the sixth length L6 may be determined by measuring the distance between the geometric center of the first cross-sectional area and the second cross-sectional area. Analogously, the seventh length L7 may be determined by measuring the distance between the geometric center of the third cross-sectional area and the fourth cross-sectional area and the eighth length L8 by measuring the distance between the geometric center of the first cross-sectional area and the fourth cross-sectional area. Alternatively, L6 and L7 may be determined on basis of a cross-section of the channel. In this case, the distance from the intersections of the central-channel-axis 300 with the third and fourth cross-sectional area represents L7 and the distance of the intersections of the central-channel-axis 130 with the first and second cross-sectional area represents L6. Analogously, the eighth length L8 may be the distance from the intersections of the central-channel-axis 130 with the first and fourth cross-sectional area.

Moreover, the longitudinal channel axis 300 is not necessarily straight. For example, if the channel 110 is curved, the longitudinal channel axis 300 may also be curved. In this case, L6 and L7 may be measured by determining the geometric centers of a plurality of cross-sectional areas along the channel 110 and summing up the individual distances between the geometric centers being disposed within the upstream and downstream section 230, respectively.

Furthermore, in some embodiments, the ratio of L7/L8 may be smaller than 0.5, more specifically smaller than 0.3 and in particular smaller than 0.15. Additionally or alternatively, the ratio of L7/L8 may be between about 0.03 to about 0.5, more specifically 0.05 to about 0.3 and in particular between about 0.1 to about 0.15. Hence, the length of the downstream section 230 may be significantly shorter compared to that of the upstream section 220. While the significant widening of the downstream section 230 may improve the flowability, the increased diameter may result in an increased space requirement of the graphitization furnace in general for a downstream section 230 of high length.

In some embodiments, the cross-section (perpendicular to the longitudinal channel axis 300) of the upstream section 220 or downstream section 230 may be elliptical or polygonal, more specifically octagonal, hexagonal, rectangular, square, or elliptical, and in particular rectangular or elliptical. The skilled person knows how to determine a diameter, but in case of doubt, the diameter should refer to the maximum diameter in a plane. For example, in the case of a square cross-section, the diagonal length in the cross-sectional area's plane may be regarded as the respective diameter of the square. For circular cross-sections, the diameters D1 to D4 are the respective inner diameters in the corresponding plane of the first to fourth cross-sectional area.

In some embodiments, wherein the cross-section of the upstream section or downstream section is polygonal, the corners of the polygon are rounded.

In a channel 110 having a polygonal cross-section (perpendicular to the longitudinal channel axis 300), not all wall sections of the channel 110 need to be angled radially outward (in the material flow direction F and relative to the longitudinal channel axis 300), to achieve a widening cross-sectional area.

Here and elsewhere, the term "wall section" refers to a part of channel's 110 wall, more specifically to a part of the wall with a length of at least 5 cm, more specifically at least 10 cm. In particular the term "wall section" may refer to a part of wall with a length of at least 5 cm, in particular at least 10 cm, and a width of at least 10 cm. The width and length may also be measured along a curved wall segment, along the curved surface. For example, within a channel 110 with a square cross-section, a wall section may be one side of the downstream section 230.

As mentioned above, in particular in the section disposed closest to the product outlet 130, e.g. in the downstream section 230, the risk of caking may be the highest. In particular, the graphitization furnace 100 may be a vertical graphitization furnace 100, wherein the carbonaceous material forms a material column. As previously described, in the section closest to the product outlet 130 the carbonaceous material's temperature may be the lowest and the compressive force of the material column may be the highest. Accordingly, the downstream section 230 may be disposed at a greater angle (or greater radially outward inclination) relative to the longitudinal channel axis 300 compared to the upstream section 220. Accordingly, in some embodiments, $\frac{(D4-D3)}{L7}$ may be greater than $\frac{D2-D1}{L6}$.

The geometry of the channel 110 may also be defined by angles between longitudinal channel axis 300 and the inner side of the upstream section 220 or downstream section 230. Accordingly, a first angle $\alpha_1$ may be defined as

$$\alpha_1 = \arctan\left(\frac{D2-D1}{2*L6}\right)$$ and a second angle $\alpha_2$ may be defined as $$\alpha_2 = \arctan\left(\frac{D4-D3}{2*L7}\right)$$. The first angle $\alpha_1$ and the second angle $\alpha_2$ are depicted in Figure 2.

In some embodiments, the first angle $\alpha_1$ may be less than 45°, 35°, 30°, 20°, 15°, 10°, 9°, 8°, 7°, 6°, 5°, 4°, 3°, 2° or 1°.

In some embodiments, the first angle $\alpha_1$ may be between about 0.1 to about 45°, more specifically between about 0.2° and 20° and in particular between about 0.3° to about 10°.

In some embodiments, it may be particularly advantageous that the first angle $\alpha_1$ may be less than 20°, 15°, 10°, 9°, 8°, 7°, 6°, 5°, 4°, 3°, 2° or 1°, in particular the first angle $\alpha_1$ may be between about 0.1 to about 20°, more specifically between about 0.2° and 10° and in particular between about 0.3° to about 5°.

In some embodiments, the first angle $\alpha_1$ may be between about 0.1° to about 5°, more specifically between about 0.1° to about 2° and in particular between about 0.1° to about 1.5°.

In some embodiments, the first angle $\alpha_1$ may be between about 0.1° to about 5°, more specifically between about 0.2° to about 2° and in particular between about 0.3° to about 1.5°.

In some embodiments, the second angle $\alpha_2$ may be less than 45°, 35°, 30°, 20°, 15°, 10°, 9°, 8°, 7°, 6°, 5°, 4°, 3°, 2° or 1°.

In some embodiments, the second angle $\alpha_2$ may be between about 0.1 to about 45°, more specifically between about 0.2° and 20° and in particular between about 0.3° to about 10°.

In some embodiments, it may be particularly advantageous that the second angle $\alpha_2$ may be less than 20°, 15°, 10°, 9°, 8°, 7°, 6°, 5°, 4°, 3°, 2° or 1°, in particular the second angle $\alpha_2$ may be between about 0.1 to about 20°, more specifically between about 0.2° and 10° and in particular between about 0.3° to about 5°.

As mentioned above, it has been found that the transport of carbonaceous material prone to caking may be improved by providing a channel section with a diameter increasing in the material transport direction and an additional channel section wherein the diameter increases even further. However, the increase in diameter also results in an increased space requirement for the graphitization furnace. After diligent research, it has been found, that in general, if the angles $\alpha_1$ and $\alpha_2$ are below 10° but above 0.1°, a sufficient material flow can still be ensured. In particular, if the angles $\alpha_1$ and $\alpha_2$ are between about 0.1° and 5° the material flow may still be sufficient while at the same time resulting in minimal space requirements.

In some embodiments, the second angle $\alpha_2$ may be between about 0.1° to about 5°, more specifically between about 0.1° to about 2° and in particular between about 0.1° to about 1.5°.

In some embodiments, the second angle $\alpha_2$ may be between about 0.1° to about 5°, more specifically between about 0.2° to about 2° and in particular between about 0.3° to about 1.5°.

In some embodiments, the first angle $\alpha_1$ may be less than 45°, 35°, 30°, 20°, 15°, 10°, 9°, 8°, 7°, 6°, 5°, 4°, 3°, 2° or 1°; and the second angle $\alpha_2$ may be less than 45°, 35°, 30°, 20°, 15°, 10°, 9°, 8°, 7°, 6°, 5°, 4°, 3°, 2° or 1°.

In some embodiments, the first angle $\alpha_1$ may be between about 0.1 to about 45°, more specifically between about 0.2° and 20° and in particular between about 0.3 to about 10°; and the second angle $\alpha_2$ may be between about 0.1° to about 45°, more specifically between about 0.2° and 20° and in particular between about 0.3° to about 10°.

In some embodiments, it may be particularly advantageous that the first angle $\alpha_1$ may be less than 20°, 15°, 10°, 9°, 8°, 7°, 6°, 5°, 4°, 3°, 2° or 1°, in particular the first angle $\alpha_1$ may be between about 0.1 to about 20°, more specifically between about 0.2° and 10° and in particular between about 0.3 to about 5°; and the second angle $\alpha_2$ may be less than 20°, 15°, 10°, 9°, 8°, 7°, 6°, 5°, 4°, 3°, 2° or 1°, in particular the second angle $\alpha_2$ may be between about 0.1° to about 20°, more specifically between about 0.2° and 10° and in particular between about 0.3° to about 5°.

In some embodiments, the first angle $\alpha_1$ may be between about 0.1° to about 5°, more specifically between about 0.1° to about 2° and in particular between about 0.1° to about 1.5°; and the second angle $\alpha_2$ may be between about 0.1° to about 5°, more specifically between about 0.1° to about 2° and in particular between about 0.1° to about 1.5°.

In some embodiments, the first angle $\alpha_1$ may be between about 0.1° to about 5°, more specifically between about 0.2° to about 2° and in particular between about 0.3° to about 1.5; and the second angle $\alpha_2$ may be between about 0.1° to about 5°, more specifically between about 0.2° to about 2° and in particular between about 0.3° to about 1.5°.

In some embodiments, the first angle $\alpha_1$ may be between about 0.1° to about 5°, more specifically between about 0.2° to about 2° and in particular between about 0.3° to about 1.5°; and the second angle $\alpha_2$ may be between about 0.1° to about 5°, more specifically between about 0.2° to about 2° and in particular between about 0.3° to about 1.5°.

In some embodiments, the agitator may comprise a plurality of mixing paddles 140, wherein a first maximum radius of rotation of a first mixing paddle 140 may be greater than a second maximum radius of rotation of a second mixing paddle 140, in particular wherein the first mixing paddle 140 may be disposed closer to the product outlet 130.

The channel 110 depicted in Figure 2, comprises three mixing paddles (140a, 140b, 140c), wherein a first maximum radius of rotation of the first mixing paddle 140c disposed closer to the product outlet 130 is greater than a second maximum radius of rotation of a second mixing paddle 140b and wherein the second maximum radius of rotation is greater than a third maximum radius of rotation of a third mixing paddle 140a. Hence, the maximum radius of rotation of the at least one mixing paddles 140 may increase with the cross-sectional area of the cross-section at which they are disposed, e.g. the maximum radius of rotation of each mixing paddle 140 of the at least one mixing paddle 140 may be at least 80 % of the maximum radius of the channel 110 at the location where the at least one mixing paddle 140 is arranged. The combination of an increasing channel 110 cross-sectional area and increasing maximum radius of rotation may be effective synergistic solution to preventing caking and thereby ensuring a high product quality. In particular, the increased diameter may allow the provision of a mixing paddle with an increased maximum radius of rotation. The increased maximum radius of rotation may result in an increased the maximum angular velocity, given the same rotation speed of the shaft. The increased maximum angular velocity may be effective in preventing caking and increasing the material flow.

In some embodiments, at least one mixing paddle 140 may be plate-shaped. The mixing paddle 140 may undergo a high rate of wear and may therefore require frequent replacement. However, components made of graphite are usually milled from large graphite blocks. As a result, producing stirrers with complex geometries may result in a large amount of off-cut, in particular in a larger amount of off-cut compared to a plate-shaped mixing paddle 140.

In some embodiments, graphitization furnace 100 may comprise at least one baffle. The baffle may increase mixing of the carbonaceous material by the mixing paddle 140, reduce the risk of vortex formation, and reduce the risk of caking.

In some embodiments, the furnace may be configured to have a non-forced gravity-based material flow in at least 70 vol.-% of the channel 110. This means in particular that the agitator does not extend through the entirety of the channel 110. Accordingly, the at least one mixing paddle 140 may be configured to only mix the carbonaceous material, as opposed to transporting it along the longitudinal channel axis. It should be noted that the mixing may also comprise mixing processes along the longitudinal channel axis, however, the mixing paddle 140 may not be configured to induce a net mass stream along the longitudinal channel axis. Relying on a non-forced gravity-based material is beneficial in reducing wear of the mixing paddle 140 and, thus, reduces the costs of operating the furnace.

In some embodiments, the agitator, in particular the shaft 150 and/or at least one mixing paddle 140, may comprise, substantially consist of or consist of a carbonaceous material, more specifically graphite, even more specifically isostatic graphite and in particular isostatic graphite coated with pyrolytic carbon. More specifically, in some embodiments, the shaft 150 and/or at least one mixing paddle 140 may comprise at least about 90 wt.-% graphite and in particular the shaft 150 and/or at least one mixing paddle 140 may comprise at least about 99 wt.-% graphite, relative to the total weight of the shaft 150 and/or mixing paddles 140. Graphite may endure temperatures in excess of 3000 °C and may exhibit good mechanical properties.

In some embodiments, the agitator, in particular the shaft 150 and/or at least one mixing paddle 140 may comprise carbon fiber reinforced carbon, CFRC, more specifically the shaft 150 and/or at least one mixing paddle 140 may comprise at least about 90 wt.-% CFRC and in particular the shaft 150 and/or at least one mixing paddle 140 may comprise at least about 99 wt.-% CFRC, relative to the total weight of the shaft 150 and/or mixing paddles 140. CFRC may exhibit improved mechanical properties compared to other carbonaceous materials. Further, CRFC is also resistant to high temperatures. The term "CFRC" is well known and attributed its common meaning in the art. More specifically, the term "CFRC" may refer to a composite material comprising carbon fibers in a matrix of graphite. In particular, the term "CFRC" may refer to a composite material consisting of carbon fibers in a matrix of graphite.

In a second aspect, the present disclosure relates to a method of using a graphitization furnace according to any preceding embodiment for preparing graphite from a carbonaceous raw material.

In some embodiments, the method may yield graphite having a graphitization degree of at least about 46 %, more specifically 69 %, even more specifically at least about 80 % and in particular at least about 83 %.

In some embodiments, the method may yield graphite which is suitable for use as anode material, in particular anode material for lithium batteries.

In some embodiments, the method further comprises the step of manufacturing an anode for lithium batteries using the graphite yielded from (continuously) operating the graphitization furnace.

Although the present invention is defined in the attached claims, it should be understood that the present invention can also (alternatively) be defined in accordance with the following embodiments:

1. A vertical graphitization furnace (100) for continuously graphitizing carbonaceous material comprising a raw material inlet (120) and a product outlet (130),

a channel (110) extending along a longitudinal channel axis (300) connecting the raw material inlet (120) and the product outlet (130),
and an agitator comprising at least one mixing paddle (140) disposed on a shaft (150).

2. The vertical graphitization furnace (100) according to embodiment 1, wherein the channel (110) comprises a heating zone, a high temperature reaction zone and a cooling zone, wherein the at least one mixing paddle (140) is arranged in the high temperature reaction zone and/or the cooling zone and performs a rotational motion substantially perpendicular to the longitudinal channel axis (300) connecting the raw material inlet (120) and the product outlet (130);
wherein the maximum radius of rotation of the at least one mixing paddle (140) is at least 80 % of the maximum radius of the channel (110) at the location where the at least one mixing paddle (140) is arranged.

3. The vertical graphitization furnace (100) according to any preceding embodiment, wherein the channel (110) comprises a first terminal end (190) at the raw material inlet (120) and a second terminal end (200) at the product outlet (130), wherein a first distance L1 is the distance between the first terminal end (190) and the second terminal end (200),
in, and a second distance L2 is the distance between the closest part of the at least one mixing paddle (140) and the second terminal end (200), in particular wherein the ratio L2/L1 is less than 0.15.

4. The vertical graphitization furnace (100) according to embodiment 3, wherein the ratio of L2/L1 is between about 0 to about 0.15, more specifically between about 0.03 to about 0.12 and in particular between about 0.05 to about 0.10.

5. The vertical graphitization furnace (100) according to any one of embodiments 3 or 4, wherein a third distance L3 is the distance between the farthest part of the at least one mixing paddle (140) and the second terminal end (200) 200 and the ratio L3/L1 is less than 0.7.

6. The vertical graphitization furnace (100) according to embodiment 5, wherein the ratio of L3/L1 is between about 0.15 to about 0.65, more specifically between about 0.25 to about 0.60 and in particular between about 0.35 to about 0.55.

7. The vertical graphitization furnace (100) according to any preceding embodiment, wherein the agitator is configured to move along the longitudinal channel axis (300), more specifically by moving along the longitudinal channel axis between a longitudinal start position and a longitudinal end position, in particular in a shaking motion.

8. The vertical graphitization furnace (100) according to any preceding embodiment, wherein the agitator is configured to vibrate more specifically by moving along the longitudinal channel axis between a vibration start position and a vibration end position.

9. The vertical graphitization furnace (100) according to embodiment 7 or 8, wherein the distance between the longitudinal start position and the longitudinal end position is between about 1 cm to about 30 cm.

10. The vertical graphitization furnace (100) according to any one of embodiments 7 to 9, wherein the travel time between the longitudinal start position and the longitudinal end position is between about 1 second to about 1 minute.

11. The vertical graphitization furnace (100) according to any one of embodiments 8 to 10, wherein the distance between the vibration start position and vibration end position is between about 0.1 mm to about 0.5 cm.

12. The vertical graphitization furnace (100) according to any one of embodiment 8 to 11, wherein the travel time between the vibration start position and the vibration end position is between about 1 ms to about 0.7 seconds.

13. The vertical graphitization furnace (100) according to any preceding embodiment, wherein the agitator comprises a gas or vacuum channel (180), in particular wherein the gas or vacuum channel (180) is disposed within the shaft (150).

14. The vertical graphitization furnace (100) according to any preceding embodiment, wherein the shaft (150) comprises a gas-impermeable tube (160) and a gas-permeable section or aperture, in particular a gas-permeable head end (170).

15. The vertical graphitization furnace (100) according to embodiment 14, wherein the gas-permeable sections or apertures comprise gas outlets, in particular gas outlets with a diameter less than the particle diameter of the carbonaceous material.

16. The vertical graphitization furnace (100) according to any one of embodiments 14 or 15, wherein a low-porosity graphite tube, in particular closed pored graphite, forms the gas-impermeable tube (160) and wherein the gas-impermeable tube (160) comprises inlays of open pored graphite configured to allow gas to pass through.

17. The vertical graphitization furnace (100) according to any one of embodiments 14 to 16, wherein the gas-permeable sections or apertures are arranged radially along sections of the gas-impermeable tube (160).

18. The vertical graphitization furnace (100) according to any one of embodiments 14 to 17, wherein the gas-permeable apertures are formed as protrusions, wherein the protrusions comprise a protrusion-gas-channel (110) configured to guide inert gas and/or purge gas to a protrusion-gas-outlet.

19. The vertical graphitization furnace (100) according to any one of embodiments 14 to 18, wherein the gas-permeable apertures formed as protrusions extending in radial direction from the shaft (150), in particular in radial direction away from the longitudinal channel axis (300).

20. The vertical graphitization furnace (100) according to any one of embodiments 14 to 19, wherein the gas-permeable apertures is comprised within the at least one mixing paddle (140).

21. The vertical graphitization furnace (100) according to any preceding embodiment, wherein the agitator comprises a plurality of mixing paddle (140)s, wherein a first maximum radius of rotation of a first mixing paddle (140) is greater than a second maximum radius of rotation of a second mixing paddle (140), in particular wherein the first mixing paddle (140) is disposed closer to the product outlet (130).

22. The vertical graphitization furnace (100) according to any one of embodiment 3 to 21, wherein the shaft (150) extends from the second terminal end (200), in particular wherein the shaft (150) extends from the second terminal end (200) along the longitudinal channel axis (300) towards the first terminal.

23. The vertical graphitization furnace (100) according to any one of embodiment 3 to 22, wherein a fourth distance L4 is the distance between the farthest part of the shaft (150) and the second terminal end (200), and wherein L4/L1 is less than 0.8.

24. The vertical graphitization furnace (100) according to embodiment 23, wherein the ratio of L3/L1 is between about 0.15 to about 0.65, more specifically between about 0.25 to about 0.60 and in particular between about 0.35 to about 0.55.

25. The vertical graphitization furnace (100) according any one of embodiment 3 to 24, wherein a fifth distance L5 is the distance between a closest gas-permeable section or aperture and the second terminal end (200), wherein the ration L5/L1 is between about 0.01 to about 0.40, more specifically between about 0.05 to about 0.30 and in particular between about 0.10 to about 0.2.

26. The vertical graphitization furnace (100) according to any preceding embodiment, wherein at least one wall segment of the of the channel (110) is angled radially outward.

27. The vertical graphitization furnace (100) according to any preceding embodiment, wherein the channel (110) comprises a upstream section (220) closer to the raw material inlet (120) and a downstream section (230) closer to the product outlet (130),

> wherein the upstream section (220) has a first cross-sectional area closer to the raw material inlet (120) and second cross-sectional area closer to the product outlet (130),
> wherein the downstream section (230) has a third cross-sectional area closer to the raw material inlet (120) and fourth cross-sectional area closer to the product outlet (130), wherein the second cross-sectional area section is larger than the first cross-sectional area, and wherein the fourth cross-sectional area is larger than the second and third cross-sectional area.

28. The vertical graphitization furnace (100) according to any preceding embodiment, wherein the upstream section (220) has a sixth length L6 and the downstream section (230) has a seventh length L7, more specifically wherein the upstream section (220) and downstream section (230) adjoin and the upstream section (220) and downstream section (230) have an aggregate length L8 and the ratio L7/L8 is smaller than 0.5, more specifically smaller than 0.3 and in particular smaller than 0.2.

29. The vertical graphitization furnace (100) according to embodiment 28, wherein the ratio of L7/L8 is between about 0.03 to about 0.5, more specifically 0.05 to about 0.3 and in particular between about 0.1 to about 0.2.

30. The vertical graphitization furnace (100) according to embodiment 28 or 29, wherein the channel (110) has a first inner diameter D1, a second inner diameter D2, a third inner diameter D3 and a fourth inner diameter D4 in the plane of the first, second, third and fourth cross-sectional area respectively, wherein the inner diameters meet the requirement

$$\frac{D2-D1}{L7} < \frac{(D4-D3)}{L6}.$$

**EP 4 455 082 A1**

31. The vertical graphitization furnace (100) according to embodiment 30, wherein the channel (110) has a first angle $\alpha_1$ defined as meeting the criterion: $\alpha_1 = \arctan\left(\frac{D2-D1}{2*L6}\right)$ and a second angle $\alpha_2$ defined as meeting the criterion: $\alpha_2 = \arctan\left(\frac{D4-D3}{2*L7}\right)$ and wherein $\alpha_1 < \alpha_2$.

32. The vertical graphitization furnace according to embodiment 31, wherein the first angle $\alpha_1$ is less than 45°, 35°, 30°, 20°, 15°, 10°, 9°, 8°, 7°, 6°, 5°, 4°, 3°, 2° or 1°.

33. The vertical graphitization furnace according to embodiment 31 or 32, wherein the first angle $\alpha_1$ is between about 0.1 to about 45°, more specifically between about 0.2°and 20° and in particular between about 0.3° to about 10°.

34. The vertical graphitization furnace according to any one of embodiments 31 to 33, wherein the first angle $\alpha_1$ is less than 20°, 15°, 10°, 9°, 8°, 7°, 6°, 5°, 4°, 3°, 2° or 1°, in particular the first angle $\alpha_1$ is between about 0.1 to about 20°, more specifically between about 0.2°and 10° and in particular between about 0.3° to about 5°.

35. The vertical graphitization furnace according to any one of embodiments 31 to 34, wherein the first angle $\alpha_1$ is between about 0.1° to about 5°, more specifically between about 0.1° to about 2° and in particular between about 0.1° to about 1.5°.

36. The vertical graphitization furnace according to any one of embodiments 31 to 35, wherein the first angle $\alpha_1$ is between about 0.1° to about 5°, more specifically between about 0.2° to about 2° and in particular between about 0.3° to about 1.5°.

37. The vertical graphitization furnace according to any one of embodiments 31 to 36, wherein the second angle $\alpha_2$ is less than 45°, 35°, 30°, 20°, 15°, 10°, 9°, 8°, 7°, 6°, 5°, 4°, 3°, 2° or 1°.

38. The vertical graphitization furnace according to any one of embodiments 31 to 37, wherein the second angle $\alpha_2$ is between about 0.1 to about 45°, more specifically between about 0.2°and 20° and in particular between about 0.3° to about 10°.

39. The vertical graphitization furnace according to any one of embodiments 31 to 38, wherein the second angle $\alpha_2$ is less than 20°, 15°, 10°, 9°, 8°, 7°, 6°, 5°, 4°, 3°, 2° or 1°, in particular the second angle $\alpha_2$ is between about 0.1 to about 20°, more specifically between about 0.2°and 10° and in particular between about 0.3° to about 5°.

40. The vertical graphitization furnace according to any one of embodiments 31 to 39, wherein the second angle $\alpha_2$ is between about 0.1° to about 5°, more specifically between about 0.1° to about 2° and in particular between about 0.1° to about 1.5°.

41. The vertical graphitization furnace according to any one of embodiments 31 to 40, wherein the second angle $\alpha_2$ is between about 0.1° to about 5°, more specifically between about 0.2° to about 2° and in particular between about 0.3° to about 1.5°.

42. The vertical graphitization furnace according to embodiment 31, wherein the first angle $\alpha_1$ is less than 45°, 35°, 30°, 20°, 15°, 10°, 9°, 8°, 7°, 6°, 5°, 4°, 3°, 2° or 1°; and the second angle $\alpha_2$ is less than 45°, 35°, 30°, 20°, 15°, 10°, 9°, 8°, 7°, 6°, 5°, 4°, 3°, 2° or 1°.

43. The vertical graphitization furnace according to embodiment 31 or 42, wherein the first angle $\alpha_1$ is between about 0.1° to about 45°, more specifically between about 0.2°and 20° and in particular between about 0.3° to about 10°; and the second angle $\alpha_2$ is between about 0.1° to about 45°, more specifically between about 0.2°and 20° and in particular between about 0.3° to about 10°.

44. The vertical graphitization furnace according to any one of embodiments 31, 42 or 43, wherein the first angle $\alpha_1$ is less than 20°, 15°, 10°, 9°, 8°, 7°, 6°, 5°, 4°, 3°, 2° or 1°, in particular the first angle $\alpha_1$ is between about 0.1° to about 20°, more specifically between about 0.2°and 10° and in particular between about 0.3 to about 5°; and the second angle $\alpha_2$ is less than 20°, 15°, 10°, 9°, 8°, 7°, 6°, 5°, 4°, 3°, 2° or 1°, in particular the second angle $\alpha_2$ is

**14**

between about 0.1° to about 20°, more specifically between about 0.2°and 10° and in particular between about 0.3° to about 5°.

45. The vertical graphitization furnace according to any one of embodiments 31, or 42 to 44, wherein the first angle $\alpha_1$ is between about 0.1° to about 5°, more specifically between about 0.1° to about 2° and in particular between about 0.1° to about 1.5°; and the second angle $\alpha_2$ is between about 0.1° to about 5°, more specifically between about 0.1° to about 2° and in particular between about 0.1° to about 1.5°.

46. The vertical graphitization furnace according to any one of embodiments 31, or 42 to 45, wherein the first angle $\alpha_1$ is between about 0.1° to about 5°, more specifically between about 0.2° to about 2° and in particular between about 0.3° to about 1.5°; and the second angle $\alpha_2$ is between about 0.1° to about 5°, more specifically between about 0.2° to about 2° and in particular between about 0.3° to about 1.5°.

47. The vertical graphitization furnace according to any one of embodiments 31, or 42 to 45, wherein the first angle $\alpha_1$ is between about 0.1° to about 5°, more specifically between about 0.2° to about 2° and in particular between about 0.3° to about 1.5°; and the second angle $\alpha_2$ is between about 0.1° to about 5°, more specifically between about 0.2° to about 2° and in particular between about 0.3° to about 1.5°.

48. The vertical graphitization furnace (100) according to any preceding embodiment, wherein the agitator comprises a plurality of mixing paddles (140), wherein a first maximum radius of rotation of a first mixing paddle (140) is greater than a second maximum radius of rotation of a second mixing paddle (140), in particular wherein the first mixing paddle (140) is disposed closer to the product outlet (130).

49. The vertical graphitization furnace (100) according to any preceding embodiment, wherein at least one the mixing paddle (140) is plate-shaped.

50. The vertical graphitization furnace (100) according to any preceding embodiment, wherein graphitization furnace comprises at least one baffle.

51. The vertical graphitization furnace (100) according to any preceding embodiment, wherein the furnace is configured to have a non-forced gravity-based material flow in at least 70 vol.-% of the channel (110).

52. The vertical graphitization furnace (100) according to any preceding embodiment, wherein the agitator comprises, substantially consists of or consists of a carbonaceous material, more specifically graphite or CFRC, even more specifically isostatic graphite and in particular isostatic graphite coated with pyrolytic carbon.

**Claims**

1. A vertical graphitization furnace (100) for continuously graphitizing carbonaceous material comprising a raw material inlet (120) and a product outlet (130),

    a channel (110) extending along a longitudinal channel axis (300) connecting the raw material inlet (120) and the product outlet (130),
    and an agitator comprising at least one mixing paddle (140) disposed on a shaft (150).

2. The vertical graphitization furnace (100) according to claim 1, wherein the channel (110) comprises a heating zone, a high temperature reaction zone and a cooling zone, wherein the at least one mixing paddle (140) is arranged in the high temperature reaction zone and/or the cooling zone and performs a rotational motion substantially perpendicular to the longitudinal channel axis (300) connecting the raw material inlet (120) and the product outlet (130); wherein the maximum radius of rotation of the at least one mixing paddle (140) is at least 80 % of the maximum radius of the channel (110) at the location where the at least one mixing paddle (140) is arranged.

3. The vertical graphitization furnace (100) according to any preceding claim, wherein the channel (110) comprises a first terminal end (190) at the raw material inlet (120) and a second terminal end (200) at the product outlet (130), wherein a first distance L1 is the distance between the first terminal end (190) and the second terminal end (200), in, and a second distance L2 is the distance between the closest part of the at least one mixing paddle (140) and the second terminal end (200), in particular wherein the ratio L2/L1 is less than 0.15.

4. The vertical graphitization furnace (100) according to claim 3, wherein the ratio of L2/L1 is between about 0 to about 0.15, more specifically between about 0.03 to about 0.12 and in particular between about 0.05 to about 0.10.

5. The vertical graphitization furnace (100) according to any one of claims 3 or 4, wherein a third distance L3 is the distance between the farthest part of the at least one mixing paddle (140) and the second terminal end (200) and the ratio L3/L1 is less than 0.7, more specifically between about 0.15 to about 0.65, even more specifically between about 0.25 to about 0.60 and in particular between about 0.35 to about 0.55.

6. The vertical graphitization furnace (100) according to any preceding claim, wherein the agitator is configured to move along the longitudinal channel axis (300) between a longitudinal start position and a longitudinal end position, in particular in a shaking motion.

7. The vertical graphitization furnace (100) according to any preceding claim, wherein the agitator is configured to vibrate between a vibration start position and a vibration end position in the longitudinal channel ais (300).

8. The vertical graphitization furnace (100) according to any preceding claim, wherein the agitator comprises a gas or vacuum channel (180), in particular wherein the gas or vacuum channel (180) is disposed within the shaft (150).

9. The vertical graphitization furnace (100) according to any preceding claim, wherein the shaft (150) comprises a gas-impermeable tube (160) and a gas-permeable section or aperture, in particular a gas-permeable head end (170).

10. The vertical graphitization furnace (100) according to any one of claim 3 to 9, wherein the shaft (150) extends from the second terminal end (200), in particular wherein the shaft (150) extends from the second terminal end (200) along the longitudinal channel axis (300) towards the first terminal.

11. The vertical graphitization furnace (100) according to any one of claim 3 to 10, wherein a fourth distance L4 is the distance between the farthest part of the shaft (150) and the second terminal end (200), and wherein L4/L1 is less than 0.8.

12. The vertical graphitization furnace (100) according to any preceding claim, wherein the channel (110) comprises a upstream section (220) closer to the raw material inlet (120) and a downstream section (230) closer to the product outlet (130),

   wherein the upstream section (220) has a first cross-sectional area closer to the raw material inlet (120) and second cross-sectional area closer to the product outlet (130),
   wherein the downstream section (230) has a third cross-sectional area closer to the raw material inlet (120) and fourth cross-sectional area closer to the product outlet (130), wherein the second cross-sectional area section is larger than the first cross-sectional area, and wherein the fourth cross-sectional area is larger than the second and third cross-sectional area.

13. The vertical graphitization furnace (100) according to any preceding claim 12, wherein the channel (110) has a first inner diameter D1, a second inner diameter D2, a third inner diameter D3 and a fourth inner diameter D4 in the plane of the first, second, third and fourth cross-sectional area respectively, and wherein the upstream section (220) has a sixth length L6 and the downstream section (230) has a seventh length L7, and wherein the channel (110) has a first angle $\alpha_1$ defined as meeting the criterion: $\alpha_1 = \arctan\left(\frac{D2-D1}{2*L6}\right)$ and a second angle $\alpha_2$ defined as meeting the criterion: $\alpha_2 = \arctan\left(\frac{D4-D3}{2*L7}\right)$ and wherein $\alpha_1 < \alpha_2$.

14. The vertical graphitization furnace (100) according to any preceding claim, wherein the agitator comprises a plurality of mixing paddles (140), wherein a first maximum radius of rotation of a first mixing paddle (140) is greater than a second maximum radius of rotation of a second mixing paddle (140), in particular wherein the first mixing paddle (140) is disposed closer to the product outlet (130).

15. The vertical graphitization furnace (100) according to any preceding claim, wherein the agitator comprises, substantially consists of or consists of a carbonaceous material, more specifically graphite or CFRC, even more specifically isostatic graphite and in particular isostatic graphite coated with pyrolytic carbon.

**Figure 1**

**Figure 2**

Europäisches
Patentamt

European
Patent Office

Office européen
des brevets

**EUROPEAN SEARCH REPORT**

Application Number

EP 23 17 0103

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | GB 725 906 A (DUISBURGER KUPFERHUETTE)<br>9 March 1955 (1955-03-09)<br>* page 1, line 40 – page 2, line 67;<br>figures 1-6 *<br>* page 2, lines 101-110 *<br>* the whole document * | 1-7,<br>12-14<br>8-11,15 | INV.<br>C01B32/05<br>C01B32/205<br>C04B11/028<br>C10B3/00<br>F27B1/10 |
| X<br><br>A | SE 426 874 B (KHIM METALL I AKADEMII NAUK<br>KA [SU]) 14 February 1983 (1983-02-14)<br>* paragraphs [0039] – [0047]; figure 1 *<br>* the whole document * | 1-5,12<br><br>6-11,<br>13-15 | |
| Y<br><br>A | CN 109 016 216 B (CHEN HONGTAO)<br>2 March 2021 (2021-03-02)<br>* paragraph [0002]; figures 1,6,9;<br>examples 1-3 *<br>* the whole document * | 8-11<br><br>1-7,<br>12-15 | |
| Y<br><br>A | US 2022/371898 A1 (MUCK MATTHIAS [DE] ET<br>AL) 24 November 2022 (2022-11-24)<br>* paragraph [0048] *<br>* the whole document * | 15<br><br>1-14 | TECHNICAL FIELDS<br>SEARCHED (IPC)<br><br>C01B<br>F27D<br>C10H<br>C04B<br>C10B<br>F27B |

The present search report has been drawn up for all claims

| Place of search | Date of completion of the search | Examiner |
|---|---|---|
| The Hague | 20 October 2023 | Follens, Lana |

EPO FORM 1503 03.82 (P04C01)

## ANNEX TO THE EUROPEAN SEARCH REPORT
## ON EUROPEAN PATENT APPLICATION NO.

EP 23 17 0103

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2023

| Patent document cited in search report | | Publication date | Patent family member(s) | | Publication date |
|---|---|---|---|---|---|
| GB 725906 | A | 09-03-1955 | NONE | | |
| SE 426874 | B | 14-02-1983 | NONE | | |
| CN 109016216 | B | 02-03-2021 | NONE | | |
| US 2022371898 | A1 | 24-11-2022 | CN | 114514196 A | 17-05-2022 |
| | | | DE | 102019126394 A1 | 01-04-2021 |
| | | | EP | 4038017 A1 | 10-08-2022 |
| | | | JP | 2022550405 A | 01-12-2022 |
| | | | KR | 20220071253 A | 31-05-2022 |
| | | | TW | 202124278 A | 01-07-2021 |
| | | | US | 2022371898 A1 | 24-11-2022 |
| | | | WO | 2021063603 A1 | 08-04-2021 |

EPO FORM P0459

For more details about this annex : see Official Journal of the European Patent Office, No. 12/82